Europäisches Patentamt

European Patent Office

Office européen des brevets

(19)

(11) Publication number: **0 051 432**
A1

(12) **EUROPEAN PATENT APPLICATION**

(21) Application number: 81305085.3

(22) Date of filing: 28.10.81

(51) Int. Cl.³: **C 25 B 11/12**
**C 25 B 1/46, C 01 B 31/08**
**C 09 C 1/56**

(30) Priority: 31.10.80 US 202579
31.10.80 US 202580

(43) Date of publication of application:
12.05.82 Bulletin 82/19

(84) Designated Contracting States:
AT BE CH DE FR GB IT LI LU NL SE

(71) Applicant: DIAMOND SHAMROCK CORPORATION
717 North Harwood Street
Dallas Texas 75201(US)

(72) Inventor: Solomon, Frank
8 Hampton Court
Great Neck New York 11020(US)

(74) Representative: Oliver, Roy Edward et al,
POLLAK, MERCER & TENCH High Holborn House 52-54
High Holborn
London WC1V 6RY(GB)

(54) Active carbon conditioning process.

(57) This disclosure is directed to active carbon particles treated by essentially a two-stage conditioning (treating) process involving separately contacting active carbon with a caustic material at elevated temperatures for varying time periods and with an acid. Either acid or alkali treatment can be performed first with intermediate washings in water between them. This two-stage conditioning process increases the surface area of the active carbon particles and imparts greater stability and resistance to sloughing (partially falling apart) to electrode active layers containing said conditioned active carbon particles. These conditioned carbon particles can be used as the essential component of an active carbon-containing layer in a cathode and utilized, for example, as an oxygen (air) cathode in a chlor-alkali cell for the electrolytic production of chlorine and caustic.

In accordance with a preferred embodiment of the invention, silver catalyst is applied to the conditioned active carbon by first adsorbing a silver salt solution thereon, removing most of the nonadsorbed silver salt solution from said active carbon, and thereafter reducing said silver salt to silver within the pores (interstices) of and on said active carbon followed by chemical reduction thereof, e.g., using formaldehyde. Preferably, the weight ratio of silver to active carbon is from about 0.1 to 0.3 weight part of silver per weight part of active carbon particles. Translated to a weight percent basis, there is from about 8 to about 25 weight percent silver based on the weight of silver plus active carbon particles employed.

EP 0 051 432 A1

Croydon Printing Company Ltd.

# ACTIVE CARBON CONDITIONING PROCESS

## BACKGROUND OF THE INVENTION

Active carbon is contemplated herein for use both in its unmodified form and as catalyzed or activated with various procedures for deposition of catalytic materials therein or thereon, e.g., noble metals such as silver, platinum, palladium, spinels, e.g., mixed metal oxides of nickel and cobalt, such as $NICO_2O_4$; perovskites, e.g., $CaTiO_3$, etc., as described at pages 54-55 et seq. of ADVANCED INORGANIC CHEMISTRY by F. Albert Cotton and Geoffrey Wilkinson, Third Edition, INTERSCIENCE PUBLISHERS.

The longevity in actual use of the enhanced active carbon particles in the corrosive environment of a chlor-alkali cell has left much to be desired. Depending upon the particular type(s) of carbon used, and frequently the impurities and content thereof, the length of actual service use in a chlor-alkali cell has been irregular and difficult to reproduce.

In accordance with this invention, it has been learned that by separately contacting the active carbon particles with an alkali (at elevated temperatures) and an acid, the porosity of the active carbon is increased and accompanied by greater stability of the active carbon-containing catalyst layer(s) when the active carbon is formulated with other components and prepared either in rolled sheet form or in the form of a sintered flat electrode and incorporated into an electrochemical cell for production of chlorine and caustic. Of particular interest herein is the preparation of active carbon particles having a B.E.T. surface area of 1000 meters$^2$/gram (m$^2$/g) and higher (and preferably at least 1300 m$^2$/g), an ash content of less than about 4 percent by weight and containing adsorbed finely divided silver and absorbed silver wherein the concentration of adsorbed silver is higher than that of absorbed silver.

## FIELD OF THE INVENTION

A well known and important type of electrochemical cell is a chlor-alkali cell which basically produces chlorine gas and alkali, e.g., sodium hydroxide, by electrolytically dissociating concentrated brine solution, viz., a solution of sodium chloride in water.

Such cells are divided by a separator into anode and cathode compartments. The separator characteristically can be a substantially hydraulically impermeable membrane, e.g., a hydraulically impermeable cation exchange membrane such as the commercially available NAFION® manufactured by the E.I. duPont de Nemours and Co. Alternatively, the separator can be a porous diaphragm, e.g., asbestos, which can be in the form of vacuum deposited fibers or asbestos paper sheet as are well known in the art. The anode can be a valve metal, e.g., titanium, provided with a noble metal coating to yield what is known in the art as a dimensionally stable anode. While varying materials can be employed for the anode and cathode of such cells, this invention pertains to active carbon which is primarily utilized in formulating active layers for making cathodes for chlor-alkali cells.

Fairly recently there have been proposed improvements in energy conservation in the operation of such electrolytic chlor-alkali cells by using so-called oxygen (air) cathodes. The purpose of such a cathode is to reduce the electrical power requirement necessary to conduct the dissociation referred to hereinabove. It has been found that as much as approximately 25 percent of the power requirement of a chlor-alkali cell is assignable to the unwanted production of hydrogen at the cathode during the electrolysis. By use of an oxygen (air) cathode, the production of molecular hydrogen can be avoided and instead the oxygen reacted with water and reduced to form hydroxide ions. Thus, 25 percent of the electrical power required to operate chlor-alkali cells could theoretically be conserved by avoiding the production of hydrogen by use of oxygen (air) cathodes.

## PRIOR ART

Although there have been many efforts aimed at obtaining stable air cathodes for utilization in chlor-alkali cells, little information is apparently known about obtaining cathode stability by treating the active carbon, per se.

U.S. Patent 4,078,119 to Murray Katz et al refers to a cathode of electrically conductive particles having a catalyst deposited on the surface.

These particles are disclosed to be agglomerates of smaller porous particles having catalyst on the surface. Such particles are disclosed to be bonded together by hydrophobic corrosion-resistant microspheres, e.g., of polytetrafluoroethylene. The conducting particles are disclosed as being made of such suitable materials as carbon black, e.g., Cabot "Vulcan XC 72," or graphitized carbon black. Of course, these materials are not active carbons. Katz et al disclose prewetting of the electrode containing the agglomerates of conductive particles after they have been formed into the electrode layer, viz., agglomerated and incorporated with the binder of polytetrafluoroethylene microspheres. According to the Katz et al patent, the electrode is prewetted with the electrolyte and then a soluble catalyst-containing material caused to enter into solution with the electrolyte on the surfaces of the conducting particles which have been wet by the electrolyte. A chemical reaction is then caused to occur which deposits the catalyst on the surface of these particles. When the conducting particles of Katz et al are made of graphitized carbon black, Katz et al state that it is necessary to prewet the conductive carbon particles in the electrode by means of an anodic potential applied to the electrode which renders the surface of the graphitized particles wettable with electrolyte probably by the formation of oxides of carbon on the surface at the interface between the electrolyte and the carbon.

The concept of prewetting of active carbon particles already incorporated into an electrode layer wherein they are bonded as agglomerates by polytetrafluoroethylene particles is not the conditioning (pretreating) process employed according to this invention which involves sequential exposure of active carbon particles to contact with a base (alkali) and an acid, the alkali contact being at elevated temperatures.

One known form of oxygen (air) cathode involves use of an active layer containing porous active carbon particles whose activity in promoting the formation of hydroxide may or may not be catalyzed (enhanced) using precious metal catalysts, such as silver, platinum, etc. Unfortunately, however, the pores of such active carbon particles may become flooded with the caustic soda thereby significantly reducing their ability to catalyze the reduction of oxygen at the air cathode and resulting in decreased operating efficiency. In an attempt to overcome these difficulties in flooding of the active carbon, hydrophobic materials, e.g., polytetrafluoroethylene (PTFE), have been employed in particulate or fibrillated (greatly attenuated and elongated) form to impart hydrophobicity to the active carbon layer, per se, and/or to a protective (wetproofing) or backing sheet which can be laminated or otherwise attached to the active layer.

Thus, PTFE has been employed in both active layers and in backing (wetproofing) layers secured thereto. Such active carbon-containing layers, however, are subjected to loss of strength resulting in failure combined with blistering thereof when the chlor-alkali cell is operated at high current densities, viz., current densities of about 250 milliamperes/cm$^2$ and higher for prolonged time periods.

According to a preferred embodiment of this invention, the alkali/acid treated active carbon particles contain chiefly adsorbed catalytic silver deposited within the pores or interstices thereof. Such adsorbed catalytic silver results in smaller silver catalyst particles, viz., having a greater catalytic surface area than absorbed silver, viz., silver catalysts formed solely by absorption of a silver precursor followed by reduction thereof.

The use of silver coated and/or impregnated carbon catalysts in various electrochemical cells, e.g., fuel cells, is well known. Such catalysts are discussed in the Elsevier Sequoia Patent Reports, Part I (5) and Part II (6), published in 1974 by Elsevier S.A. Lusanne, Switzerland. In Part I (5) at page 13 under the Designation 107/16, there is reference made to Drengler U.S. Patent 3,347,708 as describing a fuel cell electrode consisting of carbon and having a discontinuous gross metal coating on its surface produced, for example, by spraying to produce a splatter effect. This coating can be nickel, silver, titanium or stainless steel, and the mean metal coating particle size produced by the technique of Drengler is gross compared with that produced by the chemical deposition of this invention, e.g., 0.01 m$^2$/g (Drengler) vs. 5 m$^2$/g (present invention).

At page 48 of Fuel Cell Electrodes Part II of the Elsevier Sequoia Patent Reports (hereinafter referred to as E.S.P.R.), reference is made to Schneider U.S. Patent 3,352,719 as disclosing a method of making silver catalyzed fuel cell electrodes by plating a silver catalyst on a substrate of carbon or nickel. The silver solution used essentially comprises an aqueous solution of a reducible source of silver, e.g., silver nitrate, a source of citrate, e.g., sodium citrate, and sufficient hydronium ions to adjust to a pH to a level at which precipitation of the silver citrate is avoided or prevented. Although the patentee, Schneider, refers broadly to using substrates such as carbon, the specific substrates referred to in this patent specification were of sintered nickel and having a homogeneous porosity of about 85 percent. It is believed that the type of carbon contemplated by Schneider U.S. 3,352,719 was used as a substrate only and was not active carbon.

In the catalyst producing process of this invention, the active carbon is catalytic, itself, for formation hydroxide ions at the cathode, but has its catalytic activity further enhanced activated or sensitized by deposition of the silver in the manner described herein.

Page 52 of the E.S.P.R., Fuel Cell Electrodes Part II, mentions at Item 24/3, French Patent 1,591,308 which is disclosed as describing a process for preparing thin electrodes with a total thickness of 0.2 to 0.3 mm by impregnating an acetylene black or other carbon particles with a catalyst precursor, e.g., $AgNO_3$, and then heating them to thermally reduce it to silver. A silver catalyst is thus deposited on the carbon particles which are on a support mix with a hydrophobic resin binder. A low surface catalyst support, e.g, acetylene carbon black, as used by French Patent 1,591,308, does not result in small particle size silver catalyst particles.

Page 52 of the same reference literature refers to French Patent 1,599,959 as Item 24/4 which, although it utilized silver nitrate as a silver precursor, effects thermal reduction thereof and not chemical reduction as is the case in the process of this invention.

At pages 55 to 56 under Item 70/2 of the E.S.P.R., Fuel Cell Electrodes Part II (6), there is reference made to Swiss Patent 449,725 under Item 70/2 as improving the activation process of carbon electrodes by incorporating salts of metals belonging to the group of silver, copper, nickel, iron, maganese and cobalt.

The same reference literature under Item 72/0 at page 56 of E.S.P.R., Fuel Cell Electrodes Part II (6), refers to Dutch Patent 126,475 as disclosing a method of treating one side of a part of an electrode (previously rendered water repellant) with an aqueous silver nitrate solution which is then chemically reduced by hydrazine in an acidic medium while applying a 0.03 to 0.04 mm thick silver layer chiefly on the surface of the electrode. The process of this patent actually prevents adsorption of silver within the active carbon particles.

Item 74/4 at page 56 of E.S.P.R., Fuel Cell Electrodes Part II (6) mentions Dutch Patent 128,886 as employing silver-coated active carbon particles in a catalyst layer wherein the silver, itself, is used as a binder to hold together the sintered layer. This patent uses silver primarily as a mirroring agent to coat the active carbon particles and enable the silver to function as a binder. The catalyst particles of this invention have a much higher concentration of adsorbed silver which because it was chemically deposited (by adsorption) before removal of the carbon particles from the $AgNO_3$ solution and then chemically reducing the $AgNO_3$ to Ag, results in much smaller silver particles (crystallites).

A paper entitled "SURVEY ABOUT CARBON AND ITS ROLE IN PHOSPHORIC ACID FUEL CELLS" by Karl Kordesch prepared for the U.S. Department of Energy under contract with Brookhaven National Laboratory, Associated Universities, Inc., Upton, Long Island, N.Y. 11973, U.S.A., under Contract No. BN464459-S bearing a date of December 31, 1979, at pages 132 to 133, refers to K. V. Kordesch U.S. Patent 3,310,434. This Kordesch patent uses any number of noble metal catalysts but does not employ activated carbon as the catalyst upon which the silver is impregnated. In addition, the Kordesch patent does not describe the use of formaldehyde to reduce the silver to its metallic form.

## BRIEF SUMMARY OF THE INVENTION

This invention is directed to preparing active carbon particles for electrodes, e.g., oxygen (air) cathodes, wherein said active carbon particles have a B.E.T. surface area of at least 1000 $m^2$/g combined with an ash content of less than about 4 percent. Procedurally this is accomplished by treating active carbon particles by separately contacting them with an alkali at elevated temperatures and with an acid. Such oxygen (air) cathodes can be used in chlor-alkali cells. According to a preferred embodiment of this invention, metallic silver is deposited onto the deashed active carbon by essentially a three-stage process involving adsorbing a silver salt on said treated active carbon, removing said silver salt to silver.

## DESCRIPTION OF THE INVENTION

The active layer of an oxygen (air) cathode is one containing the active carbon particles where hydroxide is formed. Such particles can be provided with precious metal, e.g., silver, platinum, etc., deposited on and/or in the pores thereof to serve as catalyst or actuators to enhance the formation of hydroxide. Moreover, such catalyzed active carbons can be present within an unsintered matrix (network) of carbon black-polytetrafluoroethylene (PTFE) which is fibrillated (compressed and greatly attenuated) to yield a matrix active layer in accordance with U.S. Patent Application Serial No. 202,578 (Docket 3112) entitled "Matrix Active Layer for Electrodes" and filed in the U.S. Patent and Trademark Office in the name of Frank Solomon on October 31, 1980. During testing of such active layers, it was noticed that after certain use periods in the corrosive alkaline environment of a chlor-alkali cell, portions of the active layer containing the catalyzed active carbon would slough off (partially disintegrate or fall apart) from the remaining portions of this layer. This sloughing would necessitate shutdown of the cell and removal of cathode.

While the exact reason(s) for this sloughing are not entirely known, it has been discovered that the durability of the layer containing the catalyzed active carbon particles in association with the PTFE can be substantially increased and its useful life lengthened by a process of separately contacting said active carbon (before catalyzing same) with an alkali at elevated temperatures and with an acid. Usually the alkali-treated particles are dried and subsequently contacting with an acid at ambient temperatures, all prior to deposition of a precious metal catalyst (if one is employed) and mixing (incorporation) with PTFE to form the self-sustaining sheet, viz., active layer, of the oxygen cathode. An additional benefit to the aforementioned pretreatment conditioning process is that there is observed an increase in the internal porosity of the active carbon.

The active carbon whose use is contemplated in accordance with this invention encompasses a variety of materials which in general, prior to the sequential deashing pretreatment, encompass a variety of amorphous carbonaceous materials, generally of vegetable origin which contain inorganic residue, e.g., noncarbonaceous oxides, collectively designed as ash.

In accordance with one preferred embodiment of this invention, the active carbon starting material is "RB" carbon which is a form of active carbon manufactured by Calgon, a division of Merck, and is made from bituminous coal by known procedures. This material can contain as much as approximately 23 percent of various oxides and components which can be collectively classified as ash. Typical analysis of the ash contained in RB carbon is as follows:

| Component | Weight Concentration |
|---|---|
| Silica | 43.34 |
| Alumina ($Al_2O_3$) | 29.11 |
| Iron Oxides ($Fe_2O_3$) | 20.73 |
| Others | 6.82 |

Such deashing does not totally remove the ash content from the active carbon but results in a substantial reduction thereof, viz., from about 70 to 80 percent or more of the ash is removed by the process of this invention. The resulting deashed active carbon characteristically contains less than about 4 weight percent ash.

The initial stage of treatment constitutes contacting the active particles as obtained, e.g., RB carbon, as mentioned above, with either an acid or an alkali followed by contact with the other. For example, during the base contacting stage, the alkali material, such as sodium hydroxide, potassium hydroxide, etc., is maintained at elevated temperatures ranging from about 90° to about 140°C and several contacting steps are used over time periods of, e.g., 0.5 to 25 hours, followed by one or more intermittent water washing step(s).

Then the thus treated active carbon is contacted with an acid, such as hydrochloric acid, for similar extended time periods at ambient temperatures. Between the alkali and acid contacting phases, the active carbon particles can optionally be dried. However, drying is not required in accordance with this invention.

Usually, the alkali is employed in the form of an aqueous solution containing from 28 to 55, and more usually from 35 to 45 weight percent alkali based on total solution.

The acid content of the aqueous acid solution customarily ranges from 10 to 30 weight percent and more usually from 15 to 25 weight percent acid based on total solution.

Prior to contact with the alkali solution, it has been found desirable to first comminute, e.g., ball mill or otherwise divide up the active carbon particles as purchased. For example, RB active carbon was ball milled for 2 to 6 hours, and more usually approximately 4 hours to reduce its particle size to the range of from about 5 microns to about 30 microns.

Usually the alkali washing stage is performed in several individual washing steps using a hot (100° to 130°C) alkali solution. After the alkali washing has been completed, the alkali is neutralized using one or more water washing step(s) to remove the alkali prior to the acid wash stage.

Similarly, the acid washing stage can be accomplished in several discrete washing steps rather than all at one time. Additionally, the contact with acid can be accomplished at lower temperatures for longer periods of time. For example, the acid wash can be conducted overnight (approximately 16 hours) at room temperature. As with the alkali contact stage preferably after the acid contact, the active carbon particles are subjected to a water washing to remove the acid followed by drying. Alternatively, the acid stage can be conducted at elevated temperatures using a Soxhlet extraction constant reflux apparatus, e.g., using HCl, HBr, etc., at 110° to 130°C for about 0.5 hr., viz., constant boiling mineral acids, each having its respective boiling range. While many acids may suitably be employed, the acid of choice is hydrochloric acid.

The active carbon preferably has a particle size ranging from about 1 to about 50 microns, and more usually from about 10 to about 20 microns, an ash content of less than about 4 weight percent, and a B.E.T. surface area of from about 1000 $m^2/g$ and higher, e.g., 1000 to $2000^+$ $m^2/g$.

The sequential condition or deashing pretreatment results in substantial reduction of the aforementioned ash content of the active carbon particle along with increases in surface area. Typically, when utilizing active carbon having an initial B.E.T. surface area of 600 to 1500 $m^2/g$ (square meters per gram) of carbon before deashing and pretreating it with alkali and acid in accordance with this invention, reductions of ash content from about 12 weight percent to less than about 4 weight percent have been accomplished along with increases in surface area of up to 50 percent.

The term "B.E.T." surface area refers to the well-known method of determining surface area according to nitrogen absorption developed by Brunauer, Emmett and Teller.

Characteristically RB active carbon which has been subjected to the sequential deashing process of this invention and incorporated with carbon black and PTFE in accordance with the aforementioned Docket 3112, have lasted for over 8000 hours at 300 milliamps of current/$cm^2$ of electrode surface.

As noted hereinabove according to a preferred embodiment of this invention, the sequentially deashed active carbon particles have predominantly adsorbed silver deposited thereon (and therein) by a process involving soaking or otherwise contacting the active carbon with a silver nitrate solution composed of silver nitrate salt dissolved in water as a solvent therefore. Other suitable water-soluble silver (precursor) salts which can be employed in the deposition step include, but are not necessarily limited to, silver perchlorate, silver acetate, silver lactate, etc. According to a preferred embodiment of this invention, the active carbon is permitted to soak in the silver nitrate solution to adsorb and absorb silver nitrate over a period ranging from about 1.5 to 2.5 hours at ambient room temperatures. Also in accordance with a preferred embodiment of this invention, the soaking takes place at or near room temperature using water as the solvent for the silver nitrate. Preferably the concentration of silver nitrate in the water ranges from about 0.3 to about 0.35 molar. However, the silver nitrate concentration in the solvent can range anywhere from about 0.1 to 0.5 molar and usually ranges from about 0.2 to 0.4 molar silver nitrate.

The deashed active carbon particles having now chiefly adsorbed and to a much lesser extent absorbed the silver nitrate solution are then subjected to an excess liquid draining or removal step to help ensure that most of the silver remaining on these particles is adsorbed within the pores thereof thereby assisting in increasing the inside concentration of metallic silver upon subsequent chemical reduction.

Subsequent to the soak in silver nitrate to permit adsorption of the silver nitrate within the pores of the active carbon, the excess silver nitrate is filtered off the active carbon to reduce the amount of silver solution retained outside of the active carbon particles.

The chemical reduction step is conducted in the absence of bulk $AgNO_3$ solution using formaldehyde. In addition to formaldehyde, other suitable chemical reducing agents include, but are not necessarily limited to, sodium borohydride, hydrazine, substituted hydrazines, hydroxyl amines, viz., RNHOH compounds where R is an alkyl group containing from 1 to 3 carbon atoms. The filter cake obtained from filtering the active carbon was added to a hot, viz., from about $70^{\circ}$ to about $95^{\circ}C$, and more preferably about $85^{\circ}C$, solution of alkaline formaldehyde accompanied with strong stirring, to effect chemical reduction of the silver nitrate to metallic silver. It is observed that this chemical reduction procedure accomplishes reduction of the silver nitrate to metallic silver without substantial aggragation of the silver crystallites. Indeed, no free silver is visually observable on the active carbon catalyzed in accordance with the procedure of this invention. On the other hand, when silver nitrate is deposited on the active carbon by suspending carbon in a dilute silver nitrate solution without removal or draining off the $AgNO_3$ impregnating solution, and slowly adding dilute sodium borohydride solution, one can actually see metallic silver mixed with the active carbon particles, after filtering the suspension of carbon and reduced silver.

Ratios of deposited silver to active RB carbon ranging from about 0.10 to about 0.25:1 have been determined to produce active carbon catalyzed with silver which is capable of good performance when incorporated into the active layer of oxygen cathode. The preferred weight ratio of metallic active silver to RB carbon is approximately 0.2 weight part of silver per weight part of RB carbon. It will, of course, be observed that a substantially preponderant portion, e.g., at least about 60 percent, of the metallic silver is adsorbed silver, viz., derived from the silver nitrate which is adsorbed upon the active carbon since a considerably less amount and concentration thereof exists on the exterior surface of the carbon particles. The inability to visually observe metallic silver on the outside of the active carbon particles catalyzed in accordance with the process of this invention is indicative of the efficacy of this invention in depositing the silver interiorly.

It has been observed that active carbon is capable of adsorbing silver nitrate from solution as well as absorbing a portion of the solution in which it was soaked. The decrease in concentration of silver nitrate during the period in which active carbon is soaked in the solution is indicative of the degree to which silver nitrate is adsorbed. Measurements have shown that approximately 2/3 of the silver incorporated in the active carbon catalyst by this process is adsorbed silver, no doubt in extremely intimate contact with all surfaces, internal and external, of the active carbon particles. That the remaining 1/3 is also very finely divided is evident since no metallic silver is visible in the finished catalyst.

The active carbon particles of this invention have a B.E.T. surface area of $1000^+$ $m^2/g$, an ash content of less than about 4 weight percent and contain adsorbed finely divided silver and absorbed silver wherein the concentration of adsorbed silver, viz., silver reduced from adsorbed silver salt, is higher than that of absorbed silver, viz., silver reduced from silver salt which is absorbed on active carbon.

The invention will be illustrated additionally in the following examples in which percents, ratios and parts are by weight unless otherwise indicated.

## EXAMPLE 1 (ALKALI THEN ACID)

This deashing procedure involved ball milling 100 grams of commercially available RB active carbon (10 to 20 microns) at a time in an Abbe ball mill. After accumulating 400 grams of ball milled active carbon, it was treated with 38 percent NaOH, preheated to $110^o$ to $120^oC$ in an oil bath maintained at $160^o$ to $170^oC$ in order to maintain the temperature of the caustic bath. The suspension of carbon and caustic was stirred for one hour and then the expended caustic was filtered off. This procedure was repeated 3 times using approximately 1600 cc of sodium hydroxide in each deashing bath. After this alkali contact, the RB carbon was water washed until its pH was down to about 10, viz., the pH of the wash water was down to about 10. The active carbon was then slurried in 1600 cc of 20 percent hydrochloric acid and allowed to stand overnight. The active carbon was finally washed until relatively acid-free, pH of the wash water being approximately 3.5 and then dried at $110^oC$ overnight. Ash contents of about 2 and less than about 3 percent are thus obtained with B.E.T. surface areas of 1500 to 1800 $m^2/g$ (as compared with B.E.T. surface areas of 1150 to 1350 $m^2/g$ prior to treatment.

## EXAMPLE 2 (ACID THEN ALKALI)

Alternatively a commercially available (Calgon) active carbon known as "PWA" was first acid washed as described above in Example 1 to an ash content of 4.6 percent and then treated in 38 percent KOH for 16 hours at 115°C. The resulting ash content was 1.6 percent.

## EXAMPLE 3 (ALKALI THEN ACID)

Ball milled "RB carbon" was found to have an ash content of approximately 12 percent as received. This "RB carbon" was treated in 38 percent KOH for 16 hours at 115°C and found to contain 5.6 percent ash content after a subsequent furnace operation. The alkali-treated "RB carbon" was water washed and then treated (immersed) for 16 hours at room temperature in 1:1 aqueous hydrochloric acid (20 percent concentration). The resulting ash content has been reduced at 2.8 percent and this material has B.E.T. surface area of 1500 to 1800 $m^2/g$ as compared with initial B.E.T. surface area of 1150 to 1350 $m^2/g$ prior to treatment.

Measurements of the surface area of the active carbon conditioned in accordance with this invention reveal that the conditioned active carbon has typical B.E.T. surface areas after treatment in the range of 1300 to 1800 and higher $m^2/g$ of active carbon, and more typically B.E.T. surface areas in excess of 1500 $m^2/g$ of active carbon and higher in combination with an ash content of less than about 4 percent, and more typically less than about 3 percent.

Overall then, it is evident that the sequential alkali-acid washing pretreatment or conditioning process of this invention offers a means of stabilizing and increasing the surface area of active carbon particles having ash contents within the ranges set forth above.

## EXAMPLE 4 (DEPOSITION OF ADSORBED SILVER)

RB active carbon particles were sequentially deashed according to the procedure of Example 1.

Twenty (20) grams of thus deashed RB active carbon was soaked in 500 mls of 0.161N $AgNO_3$ with stirring for 2 hours, and the excess solution was filtered off leaving a filter cake of active carbon/$AgNO_3$. Four hundred sixty (460) mls of 0.123N $AgNO_3$ were recovered by filtration.

The filter cake was stirred rapidly into 85°C alkaline formaldehyde solution, prepared using 300 cc water, 30 cc of 30 percent aqueous NaOH and 22 cc of 37 percent aqueous formaldehyde, to precipitate silver in the pores or interstices of the active carbon.

Calculations indicated that 79 percent of the 2.58 grams of retained silver in the catalyst was derived from adsorbed silver nitrate.

## EXAMPLE 5

The procedure of Example 1 was repeated except that the $AgNO_3$ solution used was 0.3N. The amount of filtrate recovered was 462 mls of 0.237N in $AgNO_3$. Upon reduction as in Example 1, the calculated concentration of catalytic silver derived from adsorbed silver nitrate was 78 percent with 4.38 grams of silver being retained.

## EXAMPLE 6 (SILVER NITRATE NOT FILTERED OFF BEFORE REDUCTION)

Twenty grams of RB active carbon, deashed as in Example 1, were stirred into 300 mls of deionized water. Then 200 mls of 0.4N $AgNO_3$ in water were added thereto with stirring for two hours. Then there were 4.8 grams of potassium borohydride in 200 mls of deionized water added slowly thereto.

Analysis indicated that no more than 35 percent of the silver was adsorbed silver, viz., derived from adsorbed silver nitrate. It will be observed that in this example, the silver nitrate solution was not removed by filtration before conducting chemical reduction.

## EXAMPLE 7 (CARBON BLACK VS. ACTIVE CARBON)

Twenty grams of commercially available "XC-72R" acetylene carbon black were soaked for two hours in 0.3N $AgNO_3$ in water with stirring and then the $AgNO_3$ solution was filtered off resulting in 385 mls of filtrate analyzed to be of 0.275N.

Chemical reduction was conducted as in Example 1. The calculated adsorbed silver for this example was 29 percent (4.77 grams Ag retained) versus the 79 percent adsorbed silver resulting from Example 1.

## EXAMPLE 8 (PREPARATION OF OXYGEN (AIR)
## CATHODE USING ACTIVE CARBON PARTICLES
## CONTAINING HIGH CONCENTRATION OF ADSORBED SILVER)

Commercially available ball milled "RB" carbon was found to have an ash content of approximately 12 percent as received. This "RB" carbon was treated in 38 percent KOH for 16 hours at 115°C and found to contain 5.6 percent ash content after a subsequent furnace operation. The alkali treated RB carbon was then treated (immersed) for 16 hours at room temperature in 1:1 aqueous hydrochloric acid (20 percent concentration). The resulting ash content had been reduced to 2.8 percent. RB carbon, deashed as above, was silvered in accordance with the following procedure:

Twenty (20 g) grams of classified deashed RB carbon was soaked in 500 ml of 0.161N (normal) aqueous $AgNO_3$ with stirring for two hours; the excess solution was filtered off to obtain a filter cake. The recovered filtrate was 460 ml of 0.123N $AgNO_3$. The filter cake was rapidly stirred into an 85°C alkaline formaldehyde solution prepared from deionized water, using aqueous formaldehyde to ppt. Ag in the pores of the active carbon.

Calculation indicated that 79 percent of the silver in the catalyst was derived from adsorbed silver nitrate. The resulting ratio of silver to RB carbon was 0.13:1.

Separately, "Shawinigan Black," a commercially available acetylene carbon black, was teflonated with "Teflon 30" (du Pont polytetrafluoroethylene dispersion), using an ultrasonic generator to obtain intimate mixture. 7.2 grams of the carbon black/PTFE mix was high speed chopped, spread in a dish, and then heat treated at 525°F for 20 minutes. Upon removal and cooling, it was once again high speed chopped, this time for 10 seconds. Then 18 grams of the classified, silvered active carbon was added to the 7.2 grams of carbon black-Teflon mix, high speed chopped for 15 seconds, and placed into a fiberizing (fibrillating) apparatus. The apparatus used for fiberizing consists of a Brabender Prep Center, Model D101, with an attached measuring head REO-6 on the Brabender Prep Center and medium shear blades were used. The mixture was added to the cavity of the mixer using 50 cc of a 30/70 (by volume) mixture of isopropyl alcohol in water as a lubricant to aid in fibrillating. The mixer was then run for 5 minutes at 30 rpm at 50°C, after which the material was removed as a fibrous coherent mass. This mass was then oven dried in a vacuum oven and was high speed chopped in preparation for rolling.

The chopped particulate material was then passed through a rolling mill, a Bolling rubber mill. The resulting matrix active layer sheet had an area density of 22-1/2 milligrams per square centimeter and was ready for lamination to a porous, PTFE wetproofing layer prepared as follows.

Two hundred cubic centimeters of isopropyl alcohol were poured into an "Osterizer" blender. Then 49 grams of du Pont 6A polytetrafluoroethylene were placed in the blender and the PTFE/alcohol dispersion was blended at the "blend" position for approximately one minute. The resulting slurry had a thick, pasty consistency. Then another 100 cc of isopropyl alcohol were added in the blender and the mixture was blended (again at the "blend" position) for an additional two minutes.

Then 91 grams of particulate sodium carbonate (ball milled and having an average particle size of approximately 3.5 microns as determined by a Fisher Sub Sieve Sizer) were added to the blender. This PTFE/sodium carbonate mixture was then blended at the "blend" position in the "Osterizer" blender for three minutes followed by a higher speed blending at the "liquefying" position for an additional one minute. The resulting PTFE/sodium carbonate slurry was then poured from the blender onto a Buchner funnel and filtered and then placed in an oven at $80^{\circ}C$ where it was dried for three hours resulting in 136.2 grams yield of PTFE/sodium carbonate mixture. This mixture contained approximately 35 weight parts of PTFE and 65 weight parts of sodium carbonate.

This mixture was mildly fibrillated in a Brabender Prep Center with attached Sigma mixer as described above.

After fibrillating, which compresses and greatly attenuates the PTFE, the fibrillated material is chopped to a fine, dry powder using a coffee blender, i.e., Type Varco, Inc. Model 228.1.00, made in France. Chopping to the desired extent takes from about 5 to 10 seconds because the mix is friable. The extent of chopping can be varied as long as the material is finely chopped.

The chopped PTFE-$Na_2CO_3$ mix is fed to 6-inch diameter chrome plated steel rolls heated to about $80^{\circ}C$. Typically, these rolls are set at a gap of 0.008 inch (8 mils) for this operation. The sheets are formed directly in one pass and are ready for use as backing layer in forming electrodes, e.g., oxygen cathodes, with no further processing beyond cutting, trimming to size and the like.

The active layer prepared as above was laminated to the backing sheet of sodium carbonate-loaded PTFE as prepared above and to a silver plated nickel screen current distributor. The current distributor was a 0.004 inch diameter nickel woven wire mesh having a 0.0003 inch thick silver plating and the woven strand arrangement tabulated below. The current distributor was positioned on one active layer side (working surface) while the backing layer was placed on the other side of the active layer.

The lamination was performed in a hydraulic press at $115^\circ$C and using pressures of 4 to 8.5 tons/in$^2$ for 3 minutes. This laminate was then hot soaked in ethylene glycol at $75^\circ$C for 20 minutes before water washing at $65^\circ$C for 15 hours and then dried.

The PTFE backing layers made as described above when washed free of sodium carbonate are characterized as porous, self-sustaining, coherent, unsintered, uniaxially oriented backing (wetproofing) layers of fibrillated polytetrafluoroethylene having pore openings of about 0.1 to 40 microns (depending on the size of the pore former used).

The laminate was then placed in a respective half cell for testing against a counter electrode in 30 percent aqueous sodium hydroxide at temperatures of $70^\circ$ to $80^\circ$C with an air flow of 4 times the theoretical requirement for an air cathode and at a current density of 300 milliamperes per cm$^2$. The testing results and other pertinent notations are given below.

## TABLE 1

| Type of Ag Plated Ni Mesh | Initial Volt. vs. Hg/Hg/O Ref. Electrode | Useful Life of Matrix Electrode (hrs) | Voltage at Failure |
|---|---|---|---|
| 58 x 60 x .004 | -0.265 volts | 8,925 | -.395 volts[1] |

[1] Shortly after 8,925 hours there was a steep decline in potential and the electrode was judged to have failed.

CLAIMS:

1. An electrode containing active carbon particles,
characterized by
the carbon particles having a B.E.T. surface area of at least 1300 $m^2$/g and an ash content of less than about 4 percent by weight.

2. An electrode as claimed in claim 1 wherein the active carbon contains a noble metal catalyst.

3. An oxygen (air) cathode containing active carbon particles,
characterized by
the carbon particles having a B.E.T. surface area of at least 1500 $m^2$/g and an ash content of less than about 3 percent by weight.

4. A chlor-alkali cell containing an oxygen (air) cathode according to claim 3.

5. A process for treating active carbon particles,
characterized by
separately contacting the carbon particles with an alkali at elevated temperature and with an acid.

6. A process as claimed in claim 5, wherein the carbon particles are contacted with the alkali at a temperature in the range from about $90^o$ to about $140^o$C for a time of about 0.5 to 24 hours.

7. A process as claimed in claim 5 or 6, wherein the carbon particles are contacted with a constant-boiling mineral acid at a temperature in the range from ambient to the boiling point of the acid for a time of about 0.5 to 16 hours.

8. A process as claimed in any of claims 5 to 7, wherein contact of the carbon particles with the alkali and the acid are respectively carried out as a plurality of steps with water washing between each step.

9. A process as claimed in any of claims 5 to 8, wherein contact with the alkali occurs before contact with the acid.

10. A process as claimed in any of claims 5 to 8, wherein contact with the acid occurs before contact with the alkali.

11. A process as claimed in any of claims 5 to 10, wherein, before contact with either alkali or acid, the active carbon is comminuted to a particle size in the range from about 5 to about 30 microns.

12. A process as claimed in any of claims 5 to 11, wherein the acid is hydrochloric acid.

13. A process as claimed in any of claims 5 to 12, wherein the alkali is sodium hydroxide or potassium hydroxide.

14. Active carbon particles, characterized by having a B.E.T. surface area of at least 1000 $m^2/g$ and an ash content of less than about 4 percent by weight and containing adsorbed finely-divided silver and absorbed silver, wherein the concentration of adsorbed silver is higher than that of absorbed silver.

15. Active carbon particles as claimed in claim 14, having a particle size in the range from about 5 to about 30 microns.

16. An oxygen (air) cathode or other electrode, containing active carbon particles as claimed in claim 14 or 15.

17. A chlor-alkali cell, containing an oxygen (air) cathode or other electrode as claimed in claim 16.

18. A method of preparing an electrode catalyst, characterized by contacting active carbon particles having a B.E.T. surface area of at least 1000 $m^2/g$ and an ash content of less than about 4 percent by weight with an aqueous silver salt solution for a sufficient time for the particles to adsorb the silver salt, removing most of the nonadsorbed silver salt solution from the carbon particles and chemically reducing the silver salt to silver whereby a deposit predominantly of adsorbed metallic silver is produced within the carbon particles.

19. A method as claimed in claim 18, wherein the carbon particles have a particle size in the range from about 5 to about 30 microns.

20. A method as claimed in claim 18 or 19, wherein the silver salt is silver nitrate.

21. A method as claimed in claim 18, 19 or 20, wherein the carbon particles with the adsorbed silver salt are contacted with alkaline aqueous formaldehyde, for chemically reducing the silver salt to silver.

22. A method as claimed in any of claims 18 to 21, wherein at least about 60 weight percent of deposited silver is derived from the adsorbed silver salt.

| | European Patent Office | EUROPEAN SEARCH REPORT | Application number EP 81305085.3 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int. Cl.³) |
|---|---|---|---|
| | GB - A - 1 545 599 (SIEMENS AKTIENGESELLSCHAFT) <br> * Page 1, lines 15-27, 69-90; page 2, lines 12-30 * <br> -- | 2,18, 20,21 | C 25 B 11/12 <br> C 25 B 1/46 <br> C 01 B 31/08 <br> C 09 C 1/56 |
| | US - A - 4 082 694 (ARNOLD N. WENNERBERG) <br> * Column 4, lines 20-64 * <br> -- | 1-3 | |
| | US - A - 1 533 031 (JOHAN NICO-LAAS ADOLF SAUER) <br> * Claims 1-3; page 2, lines 129-131; page 3, lines 1-4 * <br> -- | 1,7,12 | TECHNICAL FIELDS SEARCHED (Int. Cl.³) <br><br> C 25 B <br> C 01 B <br> C 09 C |
| | US - A - 1 074 337 (ABRAHAM WIJNBERG) <br> * Claims 1-3; page 1, lines 107-112; page 2, lines 1,2 * <br> ---- | 1,5,8 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims |
|---|---|

| Place of search VIENNA | Date of completion of the search 26-01-1982 | Examiner HEIN |
|---|---|---|

EPO Form 1503.1 06.78